# EUROPEAN PATENT APPLICATION

(11) **EP 4 223 816 A1**
(43) Date of publication of application: **09.08.2023**
(21) Application number: 22155230.0
(22) Date of filing: 04.02.2022
(51) Int. Cl.: C08G 18/24, C08G 18/48, C08L 75/08

(54) **POLYOL COMPOSITION**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a polyol composition, a corresponding polyurethane reaction system and a polyurethane foam prepared therefrom.

## Description

### Technical field

The invention relates to a polyol composition, a polyurethane reaction system and a polyurethane foam prepared therefrom.

### Prior Art

It is known in the industry that polyurethane foams can be used to manufacture sandwich structures for automobile interiors, such as roof linings and pillar trims, etc. However, people's requirements for the comfort of automobiles and furniture are increasing with the rapid economic development. Nowadays, polyurethane products are required to have lower VOC volatilization, low fogging and low odor in automobile industry, while there are also higher standards for the physical properties thereof. However, the approval period for raw materials in the automobile industry is very long, and it is often difficult to accept new raw materials. An urgent problem to be solved is how to improve the quality and applicability of raw materials for polyurethanes economically, effectively and environmentally.

CN1098298C discloses a process for preparing a flexible polyurethane foam by reacting a polyisocyanate and two different polyols under foam forming conditions so as to prepare a rigid foam and then crushing the rigid foam so obtained.

CN1257203C discloses a process for preparing a viscoelastic polyurethane foam by reacting a polyisocyanate composition with a polyol composition comprising b1) an EO-rich polyol; b2) a polyol with an EO content between 20-50 % and a primary hydroxyl content of at least 50%; b3) a polyol with an EO content between 10-20 % and a primary hydroxyl content of at least 50%; and b4) a polyoxyalkyleneglycol.

Despite the above disclosures, the market still urgently needs optimized polyol compositions.

### Summary of invention

One aspect of the present invention provides a polyol composition comprising:
**B1)** an EO- and/or PO-terminated polyether polyol, having a functionality of 2-4, having a weight-average molecular weight of 4000-7000 g/mol (test method referring to GBT 21863-2008), preferably 4500-5000 g/mol, and an EO content of ≥12.0% by weight, preferably ≥13.0% by weight, particularly preferably 14.0-25.0% by weight, based on the total weight of B1);
**B2)** a PO-terminated polyether polyol having a functionality of 1.5-3, and having a weight-average molecular weight of 600-1200 g/mol (test method referring to GBT 21863-2008), preferably 800-1100 g/mol;
**B3)** an EO-terminated polyether polyol having a functionality of 1.5-3, having a weight-average molecular weight of 100-400 g/mol (test method referring to GBT 21863-2008), preferably 150-250 g/mol, and an EO content of 1-15% by weight, preferably 1-12% by weight, based on the total weight of B3);
**B4)** a PO- and/or EO-terminated polyether polyol having a functionality of 2-4, having a weight-average molecular weight of 4000-6000 g/mol (test method referring to GBT 21863-2008), preferably 4000-5000 g/mol, and an EO content of ≥50.0% by weight, preferably ≥70.0% by weight, based on the total weight of B4); wherein B4) is different from B1);
wherein the components B3) and B4) have a content ratio of B3):B4) <1, preferably <0.5, more preferably 0.1-0.45.

Preferably, the polyether polyol in B1) has a functionality of 3, and more preferably the polyether polyol is started from glycerol, sucrose and/or sorbitol.

Preferably, the content of B1) is 20-60% by weight, preferably 30-60% by weight, based on the total weight of the polyol composition.

Preferably, the polyether polyol in B1) is EO-terminated.

Preferably, the polyether polyol in B2) has a functionality of 2, and more preferably the polyether polyol is started from started from propylene glycol.

Preferably, the content of B2) is 10-50% by weight, preferably 15-40% by weight, based on the total weight of the polyol composition.

Preferably, the polyether polyol in B3) has a functionality of 2, and more preferably, the polyether polyol is started from ethylene glycol.

Optionally, the content of B3) is 1-15% by weight, preferably 1-10% by weight, based on the total weight of the polyol composition.

Preferably, the polyether polyol in B4) has a functionality of 3, and more preferably the polyether polyol is started from glycerol.

Preferably, the content of B4) is 5-25% by weight, preferably 10-20% by weight, more preferably 13-15% by weight, based on the total weight of the polyol composition.

Preferably, the polyether polyol in B4) is EO-terminated.

Preferably, the polyol composition further comprises B5) at least one surfactant.

Preferably, the polyol composition further comprises B6) at least one foaming agent.

Preferably, the foaming agent is selected from water, the content of which is 5-20% by weight, preferably 10-15% by weight, based on the total weight of the polyol composition.

Preferably, the polyol composition further comprises B7) at least one catalyst.

Preferably, a polyurethane reaction system comprising the polyol composition has a difference between the bubbling time and the gel time, i.e. a value of the bubbling time minus the gel time of >20 seconds, preferably ≥25 seconds, more preferably 25-50 seconds.

Preferably, the polyurethane foam prepared from the polyol composition has an absolute value of the 24-hour shrinkage rate of ≤10%, preferably ≤2% (test method GB 8811-2008).

Preferably, the polyurethane foam prepared from the polyol composition comprising B3) and B4) has an absolute value of the 24-hour shrinkage rate reduced by ≥5%, preferably ≥10% (test method GB 8811-2008), compared with that of a foam prepared from the same polyol composition but without B3) and B4).

Preferably, the polyurethane foam prepared from the polyol composition with B3):B4) <1 (preferably <0.5, more preferably 0.1-0.45) has an absolute value of the 24-hour shrinkage rate reduced by ≥5%, preferably ≥10% (test method GB 8811-2008), compared with that of a foam prepared from the same polyol composition but without B3):B4) <1.

Specifically, if the polyurethane foam prepared from the polyol composition with B3):B4) <1 has an absolute value of the 24-hour shrinkage rate of X and the polyurethane foam prepared from the polyol composition without B3):B4) <1 has an absolute value of the 24-hour shrinkage rate of Y, then the polyurethane foam prepared from the polyol composition with B3):B4) <1 has an absolute value of the 24-hour shrinkage rate reduced by a value of (Y - X) /Y^{∗} 100%.

Preferably, the polyurethane reaction system of the polyol composition with B3):B4) <1 (preferably <0.5, more preferably 0.1-0.45) has a difference between the bubbling time and the gel time increased by ≥10%, preferably ≥15%, compared with that of a polyurethane reaction system of the same polyol composition but without B3):B4) <1.

Specifically, if the polyurethane reaction system of the polyol composition with B3):B4) <1 has a difference between the bubbling time and the gel time of P, and the polyurethane reaction system of the polyol composition without B3):B4) <1 has a difference between the bubbling time and the gel time of Q, then the polyurethane reaction system of the polyol composition with B3):B4) <1 has a difference between the bubbling time and the gel time increased by a value of (P - Q)/Q^{∗} 100%.

We discovered unexpectedly that the polyol composition of the present invention comprising the components B3) and B4) and the components B1) and B2) compatible with them can prepare polyurethane foams with ideally uniform open cells, low density and higher stability, and also ensures that the process is more stable and efficient, and foams are not easy to collapse and shrink, and the yield is greatly improved, thereby improving the production efficiency. Moreover, the waste of raw materials is avoided, costs are saved, and it is more environmentally friendly.

In particular, the polyol composition of the present invention comprising component in a specific content, especially with the weight ratio of B3) and B4) of <1 (preferably <0.5, more preferably 0.1-0.45), has a satisfactory processability, and can simply, economically and efficiently prepare polyurethane foams having higher stability, >50% by volume of open cells (measured according to DIN ISO 4590-86) and low density, which can meet specific applications better.

Another aspect of the present invention provides a polyurethane reaction system comprising:
component A, polyisocyanate;
component B, comprising the aforementioned polyol composition of the present invention.

In an embodiment, component A comprises:
A1) 0-10% by weight, preferably 0.1-8% by weight of 2,2'-diphenylmethane diisocyanate, based on the total weight of component A,
A2) 10-30% by weight, preferably 15-25% by weight of 2,4'-diphenylmethane diisocyanate, based on the total weight of component A; and
A3) 25-75% by weight, preferably 35-55% by weight of 4,4'-diphenylmethane diisocyanate, based on the total weight of component A.

Preferably, the polyurethane reaction system further comprises component C) expanded graphite.

Preferably, the mass ratio of the component A and the component B is 150-180:100, more preferably 165-175:100.

Preferably, the mass ratio of the component A, the component B and the component C is 150-180: 100: 15-35, more preferably 165-175: 100: 15-25.

Preferably, the polyurethane reaction system has a difference between the bubbling time and the gel time, i.e. a value of the bubbling time minus the gel time of >20 seconds, preferably ≥25 seconds, more preferably 25-50 seconds.

Preferably, the polyurethane reaction system with B3):B4) <1 has a difference between the bubbling time and the gel time increased by ≥10 %, more preferably ≥15%, compared with that of the same polyurethane reaction system but without B3):B4) <1.

The polyurethane reaction system comprising the aforementioned polyol composition of the present invention can prepare satisfactory polyurethane foams and related polyurethane products.

Another aspect of the present invention provides a polyurethane foam prepared by the reaction of the polyurethane reaction system of the present invention.

Preferably, the polyurethane foam has an absolute value of the 24-hour shrinkage rate of ≤10%, preferably ≤2% (test method GB 8811-2008).

Preferably, the polyurethane foam prepared from the polyol composition with B3):B4) <1 has an absolute value of the 24-hour shrinkage rate reduced by ≥5%, preferably ≥10% (test method GB 8811-2008), compared with that of the polyurethane foam prepared from the same polyol composition but without B3):B4) <1.

Preferably, the polyurethane foam has a core density of 10-16 kg/m³, preferably 10-15 kg/m³ (test method ASTM D 1622-03).

Optionally, the polyurethane foam has >50% by volume of open cells (measured according to DIN ISO 4590-86).

Another aspect of the present invention provides a method for preparing a polyurethane foam, including preparing the polyurethane foam by reacting the aforementioned polyurethane reaction system.

Another aspect of the present invention provides a polyurethane composite panel, comprising two surface layers and a rigid polyurethane foam layer located between the two surface layers, wherein the rigid polyurethane foam is prepared by the method for preparing a polyurethane foam of the present invention.

Preferably, the material of the two surface layers is respectively selected from glass fibers, natural fibers, paper, thermoplastic films and non-woven fabrics.

Another aspect of the present invention provides a method for preparing the polyurethane composite board of the present invention, including:
applying an adhesive on the inner surface of the two surface layers or surfaces of the polyurethane foam layer prepared beforehand,
placing the polyurethane foam between the two surface layers and then placing the assembly in a mold, and
keeping the mold closed at a temperature of 100-150° C for 30-50 seconds to obtain the polyurethane composite board.

Another aspect of the present invention provides use of the polyurethane foam of the present invention for manufacturing automobile interiors, preferably insulation pads for automobile engine compartments.

Another aspect of the present invention provides a polyurethane product comprising the polyurethane foam of the present invention.

Preferably, the polyurethane product is selected from automobile interiors, more preferably insulation pads for automobile engine compartments.

### Embodiments

Various aspects of the present invention will now be described in detail.

### Polyols

The polyols that can be used in the present invention include a variety of polyether polyols and/or mixtures thereof.

The polyether polyols can be prepared by a known process. Usually, they are prepared by mixing ethylene oxide or propylene oxide with ethylene glycol, 1,2-propanediol, 1,3-propanediol, diethylene glycol, glycerol, trimethylolpropane, pentaerythritol, triethanolamine, toluene diamine, sorbitol and sucrose in the presence of glycerol or propylene glycol as a starter.

In addition, the polyether polyols can also be prepared by mixing at least one olefin oxide containing alkylene having 2-4 carbon atoms with a compound having 2 to 8, preferably but not limited to, 3-8 active hydrogen atoms or other reactive compounds in the presence of a catalyst.

Examples of the catalyst include but are not limited to alkali metal hydroxides such as sodium hydroxide, potassium hydroxide, or alkali metal alkoxides such as sodium methoxide, sodium ethoxide or potassium ethoxide or potassium isopropoxide.

Usable olefin oxides include but are not limited to, tetrahydrofuran, ethylene oxide, 1,2-propylene oxide, 1,2-butylene oxide, 2,3-butylene oxide, styrene oxide, and any mixtures thereof.

Usable compounds containing active hydrogen atoms include but are not limited to polyhydroxy compounds, preferably, but not limited to, water, ethylene glycol, 1,2-propanediol, 1,3-propanediol, diethylene glycol, trimethylolpropane, and any mixtures thereof, more preferably polyhydric, especially trihydric or multihydric alcohols, such as glycerol, trimethylolpropane, pentaerythritol, sorbitol and sucrose. Usable compounds containing active hydrogen atoms also include, preferably but are not limited to, organic dicarboxylic acids such as succinic acid, adipic acid, phthalic acid and terephthalic acid, or aromatically or aliphatically substituted diamines such as ethylene diamine, diethylene triamine, triethylene tetramine, propylene diamine, butane diamine, hexamethylene diamine or toluene diamine.

Examples of alkylene oxide compounds that can be used in the present invention include, but are not limited to, ethylene oxide, 1,2-propylene oxide, 1,2-butylene oxide, 2,3-butylene oxide, styrene oxide or a mixture thereof, particularly preferably a mixture of ethylene oxide and 1,2-propylene oxide.

When used in the present invention, the term "alkylene oxide compound" also includes oxacycloalkanes, examples of which include, but are not limited to, tetrahydrofuran and oxetane.

When used in the present invention, the "amine" refers to a compound containing a primary amino group, a secondary amino group, a tertiary amino group, or a combination thereof. Examples of compounds that can be used as the amines of the present invention include, but are not limited to, triethanolamine, ethylenediamine, toluene diamine, diethylenetriamine, triethylenetetramine and derivatives thereof, preferably ethylenediamine, toluene diamine, particularly preferably toluene diamine.

### Polyisocyanate component

The isocyanate that can be used in the present invention may include any organic polyisocyanate, including aromatic, aliphatic, and cycloaliphatic polyisocyanates or combinations thereof. The polyisocyanate can be represented by the general formula R(NCO)n, where R represents an aliphatic hydrocarbon group containing 2-18 carbon atoms, an aromatic hydrocarbon group containing 6-15 carbon atoms, and an araliphatic hydrocarbon group containing 8-15 carbon atoms, and n=2-4.

Usable polyisocyanates include but are not limited to, vinyl diisocyanate, tetramethylene 1,4-diisocyanate, hexamethylene diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrogenated diphenylmethane 2,4-diisocyanate, perhydrogenated diphenylmethane 4,4-diisocyanate, phenylene 1,3-diisocyanate, phenylene 1,4-diisocyanate, stilbene 1,4-diisocyanate, 3,3-dimethyl 4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanate and/or diphenylmethane diisocyanate homologs with more nuclei, polyphenyl polymethylene polyisocyanate (polymeric MDI), naphthylene-1,5-diisocyanate (NDI), their isomers, any mixtures of them and their isomers.

Usable polyisocyanates can also include isocyanates modified with carbodiimide, allophanate, or isocyanate, preferably, but not limited to, diphenylmethane diisocyanate, carbodiimide-modified diphenylmethane diisocyanate, their isomers, mixtures of them and their isomers.

When used in the present invention, the polyisocyanate may include isocyanate dimers, trimers, tetramers, or combinations thereof.

Preferably, the polyisocyanate component comprises: A1) 0-10% by weight, preferably 0.1-8% by weight of 2,2'-diphenylmethane diisocyanate, based on the total weight of component A; A2) 0-30% by weight, preferably 10-25% by weight of 2,4'-diphenylmethane diisocyanate, based on the total weight of component A; and A3) 25-75% by weight, preferably 35-55% by weight of 4,4'-diphenylmethane diisocyanate, based on the total weight of component A.

The organic polyisocyanate of the present invention may have an NCO content of 20-33% by weight, preferably 25-32% by weight, particularly preferably 30-32% by weight. The NCO content is measured by GB/T 12009.4-2016.

Organic polyisocyanates can also be used in the form of polyisocyanate prepolymers. These polyisocyanate prepolymers can be obtained by reacting an excess of the aforementioned organic polyisocyanate with a compound having at least two isocyanate-reactive groups at a temperature of, for example, 30-100°C, preferably about 80°C. The polyisocyanate prepolymer of the present invention may have an NCO content of 20-33% by weight, preferably 25-32% by weight. The NCO content is measured by GB/T 12009.4-2016.

The isocyanate content of the present invention may be >40% by weight, preferably >50% by weight, based on the total weight of the polyurethane reaction system.

### Catalyst

The polyurethane reaction system of the present invention may also comprise one or more catalysts. The catalysts that can be used in the present invention include tertiary amine catalysts and organotin catalysts. The tertiary amine catalyst includes, but is not limited to, one, two or more of triethylamine, tributylamine, dimethylethanolamine, bis(dimethylaminoethyl)ether, triethylenediamine, N-ethylmorpholine, N,N,N',N'-tetramethyl-ethylenediamine, pentamethyldiethylenetriamine, dimethylaminopropylene diamine, N,N,N',N'-tetramethyldipropylenetriamine and weak acid-modified products of the amine catalysts. The content thereof may be 1.0-5.0% by weight, preferably 1.8-3.0% by weight, based on the total weight of component B.

The organotin catalyst may include dibutyltin dilaurate and tin(II) bis(2-ethylhexanoate). The content thereof may be 0.1-1.0%, preferably 0.1-0.3%, based on the total weight of component B.

### Foaming agent

The foaming agent used in the present invention is preferably water. The content thereof may be 1-18% by weight, preferably 2-15% by weight, based on the total weight of component B.

### Surfactant

The surfactant chosen in the present invention is preferably silicone oil. The content thereof may be 0.1-2% by weight, preferably 0.1-1.5% by weight of silicone oil, based on the total weight of component B.

Surprisingly, we found after repeated experiments that the polyol composition of the present invention comprising specific polyether polyols (such as components B3) and B4) and other components compatible with them) can prepare polyurethane foams with low density, having specific open cells (for example, >50% by volume, measured according to DIN ISO 4590-86) and of higher stability. The process is controlled, simply and efficiently, and the collapse and the unacceptable shrinkage of the foams are avoided, thereby greatly improving the yield and production efficiency. It also saves raw materials, which is conducive to environmental protection.

Moreover, we have surprisingly found that the polyurethane foams prepared from the polyol composition of the present invention can greatly reduce foam shrinkage rate thereof. In addition, the difference between the bubbling time and the gel time thereof can be increased to a certain extent. The higher the difference between the bubbling time and the gel time is conducive to the formation and the stabilization of foams.

Unless otherwise specified, all technical and scientific terms used herein have the same meaning as commonly understood by those skilled in the art to which the present invention belongs. When there is a conflict between the definition of a term in this text and the meaning commonly understood by those skilled in the art to which the present invention belongs, the definition described in this text shall prevail.

Unless otherwise stated, all numerical values used herein to express the amount of ingredients, reaction conditions, etc. are understood to be modified by the term "about."

As used herein, "and/or" refers to one or all of the mentioned elements.

As used herein, "including" and "comprising" cover the situations, in which only the mentioned elements exist, and the situations, in which there are other unmentioned elements besides the mentioned elements.

Unless otherwise stated, all percentages in this text are percentages by weight.

The present invention is now described through the examples for illustrative purposes and not for limitation.

### Examples

The types, sources and proportions of raw materials of the present invention are shown in Table 1 below.

Description of test methods:
Functionality refers to the value measured according to the industry formula: functionality = hydroxyl value ^{∗} molecular weight/56100; wherein the molecular weight is determined by GPC high performance liquid chromatography;
Core density refers to the density of the foam center tested when the mold used in the process for preparing polyurethane foam composite panels is overfilled, that is, the core density of molded foams, measured by ASTM D 1622-03;
Gel time refers to the time period at 25°C from the start of mixing of the component A and the component B until the viscosity reaches a certain value (for example: about 10,000 mPa·s). The gel time of the present invention is tested using a gel tester. The specific test method includes mixing the component A and the component B evenly and placing them in the gel tester, and recording the time period from pressing the start button until the gel tester stops working as the gel time. The gel tester used in the present invention is available from Shanghai SINO-LAB Instrument Co. Ltd. (model GT-STHP-220 from Shanghai SINO-LAB Instrument Co. Ltd.);
Bubbling time refers to the time period from the start of mixing the component A and the component B of the reaction system until obvious bubbles appear on the top of the foams through observation during the foaming process.

The absolute value of the 24-hour shrinkage rate of foams refers to the value obtained by the test according to the GB 8811-2008, which is taken as an absolute value.

Tensile strength and elongation at break are determined by DIN-53455-1981.

Compressive strength is determined by GB/T 8813-2008 (ISO 844:2004,IDT).

Cell size is determined by visual inspection or by a ruler.

The types, sources and proportions of raw materials of the present invention are shown in the following description and Table 1.

Polyisocyanate, Desmodur 0589, with the NCO content of 31-33%% and viscosity of 40-80 mPa·s, tested at room temperature, purchased from Covestro Polymers (China) Co., Ltd.; Polyol-1: PO/EO-terminated basic polyether having a functionality of 3, a hydroxyl value of 35 mg KOH/g and started from glycerol, 15% of EO-termination, purchased from Covestro; Polyol-2: PO-terminated basic polyether having a functionality of 2, a hydroxyl value of 110 mg KOH/g, started from propylene glycol, purchased from Ningwu Chemical Co. Ltd.; Polyol-3: EO-terminated basic polyether (PEG200) having a functionality of 2, a hydroxyl value of 560 mg KOH/g and started from ethylene glycol, purchased from Ningwu Chemical Co. Ltd.;
Polyol-4: PO/EO-terminated basic polyether, having a functionality of 3, a hydroxyl value of 37 mg KOH/g and started from glycerol, 73% of EO-termination, purchased from Covestro; Catalyst: KAOLIZER Nr. 25, a tertiary amine catalyst, CAS: 1862-07-3, purchased from Kao Japan;
Organotin catalyst: Dabco T-9, purchased from Evonik;
Foaming agent: water;
Surfactant: SBU 001, silicone oil, siloxane as active ingredient, purchased from Shin-Etsu Chemical Co., Ltd.;
Expanded graphite: particle size of 80 mesh, carbon content of 99.2, expansion ratio of 200 ml/g, purchased from Qingdao Fengnian Graphite Technology Co., Ltd.

### Preparation of polyurethane foams of the present invention

Example 1 and Comparative Examples 1-3:
At room temperature (the temperature of about 23-25°C), the specific weight parts of the polyisocyanate of component A and the constituents of component B listed in Table 1 are thoroughly mixed under stirring and then foamed to obtain the polyurethane foams of the Example and of the Comparative Examples.

**Table 1-The proportions of components of Example 1 and Comparative Examples 1-3 (unit: % by weight, based on the total weight of component B) and the obtained test results**

| Component | OHV | Comp. Ex. 1 | Comp. Ex. 2 | Ex. 1 | Comp. Ex. 3 |
|---|---|---|---|---|---|
| | | bwt. | bwt. | bwt. | bwt. |
| Polyol-1 | 35 | 45.00 | 45.00 | 43.00 | 43.00 |
| Polyol-2 | 110 | 35.00 | 32.00 | 26.00 | 26.00 |
| Polyol-3 | 560 | 5.00 | 5.00 | 5.00 | |
| Polyol-4 | 37 | 2.00 | 5.00 | 13.00 | 13.00 |
| Surfactant | 20 | 0.50 | 0.50 | 0.50 | 0.50 |
| T-9 | | 0.20 | 0.20 | 0.20 | 0.20 |
| Water | 6233 | 11.00 | 11.00 | 11.00 | 11.00 |
| KAOLIZER Nr.25 | 386 | 1.00 | 1.00 | 1.00 | 1.00 |
| Desmodur 0589 | 32.0% | 170.00 | 170.00 | 170.00 | 170.00 |
| Total weight of polyol composition | | 100.00 | 100.00 | 100.00 | 95.00 |
| Reaction Index | | 0.95 | 0.95 | 0.95 | 0.95 |
| | | | | | |
| Expanded graphite | | 70 | 70 | 70 | 70 |
| Temperature of raw materials | °C | 25 ± 0.5 | 25 ± 0.5 | 25 ± 0.5 | 25 ± 0.5 |
| Water | % | 11.1 | 11 | 11.2 | 11.2 |
| Ambient temperature | °C | 23 | 24 | 23 | 24 |
| Cream time | s | 29 | 26 | 27 | 25 |
| Gel time | s | Collapse | 81 | 82 | 79 |
| Bubbling time | s | | 102 | 124 | Collapse |
| Bubbling time - gel time | s | | 21 | 42 | |
| Cell size | mm | | Collapse during the process | 0.3-0.5 | |
| Core density | kg/m³ | | | 13.7 | |
| Surface hardness | LX-F | | | 78 | |
| Compressive strength | Kpa | | | 22 | |
| Tensile strength | Kpa | | | 56 | |
| Elongation at break | % | | | 37 | |
| Absolute value of the 24-hour shrinkage rate | | >30% | >30% | 1.6% | >30% |

It can be seen from the test results in Table 1 that the polyurethane foam prepared from the polyurethane reaction system of the polyol composition comprising polyols B3 and B4 and other components compatible with them of the present invention has not only superior physical properties (low density, uniform cells, stable foams, etc.), can also avoid situations of collapse and severe shrinkage that are prone to occur during the foaming process.

Although the present invention has been described in detail above as regards the purpose of the present invention, it should be understood that this detailed description is only exemplary. In addition to the content that may be defined by the claims, the present invention may be implemented in other special forms without departing from the spirit or main characteristics of the present invention.

## Claims

1. A polyol composition comprising:
**B1)** an EO- and/or PO-terminated polyether polyol having a functionality of 2-4, a weight-average molecular weight of 4000-7000 g/mol (test method referring to GBT 21863-2008), preferably 4500-5000 g/mol, and an EO content of ≥12.0% by weight, preferably ≥13.0% by weight, particularly preferably 14.0-25.0% by weight, based on the total weight of B1);
**B2)** a PO-terminated polyether polyol having a functionality of 1.5-3 and a weight-average molecular weight of 600-1200 g/mol (test method referring to GBT 21863-2008), preferably 800-1100 g/mol;
**B3)** an EO-terminated polyether polyol having a functionality of 1.5-3 and a weight-average molecular weight of 100-400 g/mol (test method referring to GBT 21863-2008), preferably 150-250 g/mol;
**B4)** a PO- and/or EO-terminated polyether polyol having a functionality of 2-4, a weight-average molecular weight of 4000-6000 g/mol (test method referring to GBT 21863-2008), preferably 4000-5000 g/mol, and an EO content of ≥50.0% by weight, preferably ≥70.0% by weight, based on the total weight of B4),
wherein B4) is different from B1); and
wherein the components B3) and B4) have a content ratio of B3):B4) <1, preferably <0.5, more preferably 0.1-0.45.

2. The polyol composition according to claim 1, wherein
the content of B1) is 20-60% by weight, preferably 30-60% by weight, based on the total weight of the polyol composition; and/or
the content of B2) is 10-50% by weight, preferably 15-40% by weight, based on the total weight of the polyol composition; and/or
the content of B3) is 1-15% by weight, preferably 1-10% by weight, based on the total weight of the polyol composition; and/or
the content of B4) is 5-25% by weight, preferably 10-20% by weight, more preferably 13-15% by weight, based on the total weight of the polyol composition.

3. The polyol composition according to claim 1 or 2, wherein a polyurethane foam prepared from the polyol composition with B3):B4) <1 has an absolute value of the 24-hour shrinkage rate reduced by ≥5%, preferably ≥10% (test method GB 8811-2008), compared with that of polyurethane foam prepared from the same polyol composition but without B3):B4) <1.

4. The polyol composition according to any one of claims 1-3, wherein a polyurethane reaction system comprising the polyol composition has a difference between the bubbling time and the gel time of >20 seconds, preferably ≥25 seconds, more preferably 25-50 seconds.

5. The polyol composition according to any one of claims 1-4, wherein a polyurethane reaction system comprising the polyol composition with B3):B4) <1 has a difference between the bubbling time and the gel time increased by ≥10%, preferably ≥15%, compared with that of the same polyurethane reaction system comprising the same polyol composition but without B3):B4) <1.

6. A polyurethane reaction system, comprising:
component A, polyisocyanate;
component B, comprising the polyol composition according to any one of claims 1-5.

7. The reaction system according to claim 6, wherein the mass ratio of the component A and the component B is 150-180:100, preferably 165-175:100.

8. The reaction system according to claim 6 or 7, wherein the polyurethane reaction system has a value of the bubbling time minus the gel time of >20 seconds, preferably ≥25 seconds, more preferably 25-50 seconds.

9. The reaction system according to any one of claims 6-8, wherein the polyurethane reaction system with B3):B4) <1 has a difference between the bubbling time and the gel time increased by ≥10%, preferably ≥15%, compared with that of the same polyurethane reaction system but without B3):B4) <1.

10. A polyurethane foam prepared by the reaction of the polyurethane reaction system according to any one of claims 6-9.

11. The polyurethane foam according to claim 10, wherein the polyurethane foam has an absolute value of the 24-hour shrinkage rate of ≤10%, preferably ≤2% (test method GB 8811-2008).

12. The polyurethane foam according to claim 10 or 11 prepared from the polyol composition with B3):B4) <1 having an absolute value of the 24-hour shrinkage rate reduced by ≥5%, preferably ≥10% (test method GB 8811-2008), compared with that of a polyurethane foam prepared from the same polyol composition but without B3):B4) <1.

13. A method for preparing a polyurethane foam, including preparing the polyurethane foam by reacting the polyurethane reaction system according to any one of claims 6-9.

14. A polyurethane product comprising the polyurethane foam according to any one of claims 10-12.

15. The polyurethane product according to claim 14, selected from automobile interiors, preferably insulation pads for automobile engine compartments.
